# EUROPÄISCHE PATENTANMELDUNG

(11) **EP 2 706 482 A1**
(43) Veröffentlichungstag der Anmeldung: **12.03.2014**
(21) Anmeldenummer: 12183410.5
(22) Anmeldetag: 07.09.2012
(51) Int. Cl.: G06K 7/10

(54) **Verfahren zur Konfigurierung eines RFID Schreib-/Lesegerätes mittels eines Transponders und Schreib-/Lesegerät für RFID-Transponder**

(71) Anmelder: Siemens Aktiengesellschaft, 80333 München (DE)
(72) Erfinder: Bock, Michael, 91166 Georgensgmünd (DE); Neidig, Jörg, 90403 Nürnberg (DE)

(57) **Zusammenfassung**

Die Erfindung betrifft ein Verfahren zur Konfigurierung eines Schreib-/Lesegerätes (SLG) für RFID-Transponder (KTG) und ein konfigurierbares Schreib-/Lesegerät (SLG). Dabei wird in dem Schreib-/Lesegerät (SLG) zumindest eine Identifizierungsnummer (TAG-ID) eines für die Konfigurierung vorgesehenen RFID-Transponders (KTG) für die Konfigurierung reserviert, wobei in einen Lesebereich (LB) des Schreib-/Lesegerätes (SLG) der für die Konfigurierung vorgesehene Transponder eingebracht und von dem Schreib-/Lesegerät (SLG) gelesen wird, sich das Schreib-/Lesegerät (SLG) gemäß einem in diesem mit der Identifizierungsnummer (TAG-ID) verknüpften Befehl und/oder gemäß zumindest einer aus einem Anwenderspeicher des Transponders ausgelesenen Information oder Befehl konfiguriert. Dadurch ist eine einfache und schnelle Inbetriebnahme eines Schreib-/Lesegerätes (SLG) oder auch eine nachträgliche Konfigurierung oder Fehlersuche ohne externe Geräte möglich. Bei Standardgeräten mit nur beschränkten Konfigurierungsmöglichkeiten kann darüber hinaus über eine separate Konfigurierungsschnittstelle verzichtet werden. Darüber hinaus muss für die Konfigurierung ein Produktivbetrieb nicht unterbrochen werden.

## Beschreibung

Die Erfindung betrifft ein Verfahren zur Konfigurierung eines Schreib-/Lesegerätes für RFID-Transponder gemäß dem Oberbegriff des Patentanspruchs 1, und ein Schreib-/Lesegerät für RFID-Transponder gemäß dem Oberbegriff des Patentanspruchs 12.

Zur berührungslosen Identifizierung von Waren, Objekten, Werkstücken in Produktionsanlagen etc. werden neben den bekannten und optisch erfassbaren Etiketten (Barcodes, QR-Codes etc.) vermehrt über Funk auslesbare Datenträger, sog. "RFID-Transponder" (RFID = Radio Frequency Identification), eingesetzt. Ein RFID-System besteht dabei aus einem Schreib-/Lesegerät und regelmäßig einer Vielzahl von sog. Transpondern, welche an den zu identifizierenden Objekten angebracht sind. Die RFID-Transponder ("TAGS") weisen dabei immer eine eindeutige Identifikationsnummer und darüber hinaus zumeist einen Anwenderspeicher (User Memory) auf; bei einer Erfassung eines Transponders durch ein Schreib-/Lesegerät werden sowohl die Identifizierungsnummer ("Tag-ID") als auch der Inhalt des Anwenderspeichers über die Luftschnittstelle zu dem Schreib-/Lesegerät übertragen. Das Schreib-/Lesegerät ist in der Regel an eine Steuerungseinheit (Industriesteuerung, SPS, Personal Computer oder dgl.) angeschlossen; über diese Steuerungseinheit wird das Schreib-/Lesegerät parametriert und im Betrieb gesteuert, d.h., dass Befehle und Daten zwischen dem Schreib-/Lesegerät und der Steuerungseinheit ausgetauscht werden.

Beim Einsatz von Schreib-/Lesegeräten in industriellen Anwendungen, insbesondere in industriellen Automatisierungsanordnungen, sind die Schreib-/Lesegeräte meist über ein FeldbusSystem an der Steuerungseinheit (meist PLC - Programmable Logic Controller) angeschlossen, wobei über das Feldbussystem die von dem Schreib-/Lesegerät erfassten RFID-Transponder bzw. deren Identifizierungsnummern und Dateninhalte gemeldet werden, bzw. umgekehrt das Schreib-/Lesegerät die über die Feldbus-Schnittstelle erhaltenen Befehle Nutzinhalte auf die mittels der Identifizierungsnummern spezifizierten RFID-Transponder überträgt.

Neben dem geschilderten Betrieb in einem Umfeld mit Steuerungsgeräten ist auch ein sog. "Stand-Alone-Betrieb" von Schreib-/Lesegeräten bekannt, wobei ein Anschluss an eine externe Steuerungseinheit im produktiven Betrieb nicht gegeben sein muss und das Schreib-/Lesegerät kleine Steuerungsaufgaben etc. selbst wahrnimmt, beispielsweise das Stellen einer Transportweiche in Abhängigkeit von Transponder-Daten, oder dgl.

Zur Konfigurierung von Schreib-/Lesegeräten werden diese regelmäßig an ein Programmiergerät angeschlossen, wobei dieses Programmiergerät beispielsweise auch ein herkömmlicher Personal-Computer sein kann. Zum Anschluss eines solchen Programmiergerätes kann beispielsweise eine Feldbus-Schnittstelle oder eine separate Schnittstelle des Schreib-/Lesegerätes verwendet werden, beispielsweise eine USB-Schnittstelle. Auch eine Konfigurierung mittels einer Funkschnittstelle, beispielsweise Bluetooth-Schnittstelle oder W-LAN, ist möglich. Nachteilig ist jedoch, dass für jegliche Konfigurierungs-Tätigkeiten ein entsprechendes Konfigurierungs-Gerät (Personal-Computer, Programmiergerät, PDA, Laptop o.ä.) an das Schreib-/Lesegerät angeschlossen bzw. in dessen Funkreichweite (Bluetooth, W-LAN) eingebracht werden muss. Selbst dann, wenn nur ein Parameter oder dgl. geändert werden muss, muss die entsprechende Konfigurierungs-Hardware bereitgestellt werden. Zur Abhilfe ist es bekannt, Schreib-/Lesegeräte mit einer Anzeigevorrichtung (Display) und Eingabemitteln (Tastatur, Touch-Screen) auszurüsten, um manuelle Eingaben "vor Ort" tätigen zu können. Nachteilig ist jedoch, dass das Vorsehen von einer Anzeigevorrichtung und von Eingabemitteln die Kosten für ein Schreib-/Lesegerät erhöht, was insbesondere in Anordnungen mit vielen Schreib-/Lesegeräten oft nicht akzeptabel ist. Zudem müssen Schreib-/Lesegeräte mit eigener Benutzeroberfläche derart positioniert sein, dass ein Benutzer die Bedienelemente auch erreichen kann, so dass hierbei Einschränkungen bezüglich des Montageortes bestehen.

Eine weitere Möglichkeit der Konfigurierung von Schreib-/Lesegeräten besteht darin, ein sog. "Web-Interface" zu integrieren, wobei ein Benutzer mit einem herkömmlichen Gerät, beispielsweise Laptop, Tablet-PC oder dgl., nach Eingabe einer Adresse (z.B. URL) Betriebsparameter etc. verändern kann. Jedoch ist auch bei dieser Variante eine Konfigurierung ohne ein solches Gerät "vor Ort" nicht möglich.

Es ist also eine Aufgabe der vorliegenden Erfindung, die Konfigurierung von Schreib-/Lesegeräten in RFID-Anordnungen zu vereinfachen.

Es ist eine zentrale Idee zur Lösung der vorstehend beschriebenen Aufgabe, für die Konfigurierung von Schreib-/Lesegeräten speziell dafür eingerichtete Transponder mit dafür reservierten Identifizierungsnummern bzw. Identifizierungsnummer-Bändern (Bereichen) vorzusehen, wobei das einfache Auslesen solcher Transponder durch das betroffene Schreib-/Lesegerät dazu führt, dass eine entsprechende Konfigurierungs-Aktion ausgelöst wird.

Die Aufgabe wird insbesondere durch ein Verfahren gemäß dem Patentanspruch 1 und durch ein Schreib-/Lesegerät gemäß dem Patentanspruch 12 gelöst.

Dabei wird ein Verfahren zur Konfigurierung eines Schreib-/Lesegerätes für RFID-Transponder vorgeschlagen, wobei zur Konfigurierung zumindest ein Betriebsparameter des Schreib-/Lesegerätes beeinflusst oder ein für die Konfigurierung verwendeter Befehl des Schreib-/Lesegerätes ausgeführt wird. Dabei wird in dem Schreib-/Lesegerät zumindest eine Identifizierungsnummer eines für die Konfigurierung vorgesehenen RFID-Transponders für die Konfigurierung reserviert, wobei in einen Lesebereich des Schreib-/Lesegerätes der zumindest eine für die Konfigurierung vorgesehene Transponder eingebracht und von dem Schreib-/Lesegerät gelesen wird, wobei die Identifizierungsnummer des gelesenen Transponders von dem Schreib-/Lesegerätes dahingehend überprüft wird, ob diese Identifizierungsnummer für die Konfigurierung reserviert ist, und wobei in dem Fall, dass die gelesene Identifizierungsnummer eine für die Konfigurierung reservierte Identifizierungsnummer ist, sich das Schreib-/Lesegerät gemäß einem in diesem mit der Identifizierungsnummer verknüpften Befehl und/oder gemäß zumindest einer aus einem Anwenderspeicher des Transponders ausgelesenen Information oder Befehl konfiguriert. Durch dieses Verfahren ist eine einfache und schnelle Inbetriebnahme eines Schreib-/Lesegerätes oder auch eine nachträgliche Konfigurierung oder Fehlersuche ohne externe Geräte möglich. Bei Standardgeräten mit nur beschränkten Konfigurierungsmöglichkeiten kann darüber hinaus über eine separate Konfigurierungsschnittstelle verzichtet werden. Darüber hinaus muss für die Konfigurierung ein Produktivbetrieb nicht unterbrochen werden.

Die Lösung der Aufgabe sieht weiterhin ein Schreib-/Lesegerät für RFID-Transponder vor, wobei das Schreib-/Lesegerät mit konfigurierbaren Betriebsparametern und/oder für zur Konfigurierung eingerichteten, ausführbaren Befehlen ausgestattet ist. Dabei ist das Schreib-/Lesegerät zur Konfigurierung seiner Betriebsparameter und/oder zur Ausführung von zu seiner Konfigurierung verwendbarer Befehle anhand der empfangenen Identifizierungsnummer und/oder anhand der aus einem Anwenderspeicher eines für die Konfigurierung eingerichteten und von dem Schreib-/Lesegerät gelesenen Transponders eingerichtet. Mit einem solchen Schreib-/Lesegerät lassen sich diejenigen Vorteile erzielen, die bereits im Zusammenhang mit dem erfindungsgemäßen Verfahren diskutiert worden sind. Vorteilhafte Ausgestaltungen des erfindungsgemäßen Verfahrens sind in den abhängigen Patentansprüchen angegeben. Die diesbezüglichen Merkmale und Vorteile gelten sinngemäß auch für das erfindungsgemäße Schreib-/Lesegerät. Die vorteilhaften Ausgestaltungen können sowohl einzeln, als auch in Kombination miteinander realisiert sein.

Vorteilhaft kann im Zuge der Reservierung der zumindest einen Identifizierungsnummer oder auch nachträglich für die Konfigurierung in dem Schreib-/Lesegerät für die zumindest eine reservierte Identifizierungsnummer in dem Schreib-/Lesegerät ein anzuwendender Betriebsparameter oder aber auch ein auszuführender Befehl bzw. Verweis auf eine Funktion oder ein Unterprogramm vorgesehen sein. In einer weiteren Ausgestaltung können für das Schreib-/Lesegerät auch verschiedene Betriebsmodi spezifiziert sein oder verschiedene Anwendungsprogramme verfügbar sein, wobei durch die Spezifizierung der Identifizierungsnummer und/oder durch eine Information im Anwenderspeicher des Transponders der entsprechende Betriebsmodus oder das entsprechende Anwendungsprogramm ausgewählt und gestartet wird. Insbesondere können auch Identifizierungsnummern bzw. Identifizierungsnummern-Bereiche ("Nummernbänder") darauf verweisen, dass im Anwenderspeicher des RFID-Transponders die eigentlichen Befehle, Anweisungen oder auch zu ändernden Betriebsparameter und deren neuen Werte abgelegt sind. Andere Konfigurierungs-Befehle können jedoch allein an die Identifizierungsnummer geknüpft sein, so dass bei diesen der Inhalt des Anwenderspeichers ignoriert wird bzw. ein Anwenderspeicher überhaupt nicht vorhanden sein muss oder zumindest nicht ausgelesen werden muss. Sofern nur ein kurzer Bereich der üblicher Weise vielstelligen Identifizierungsnummern eine entsprechende Codierung enthält, die darauf hinweist, dass es sich bei dem betreffenden Transponder um einen für die Konfigurierung vorgesehenen Transponder handelt, kann in dem Schreib-Lesegerät schnell und einfach entschieden werden, ob der betreffende ausgelesene Transponder zum "Produktivbetrieb" gehört, oder ob dieser durch einen für die Konfigurierung vorgesehenes Unterprogramm des Schreib-/Lesegerätes verarbeitet werden muss.

Zumindest eine Identifizierungsnummer oder ein Identifizierungsnummern-Bereich kann dafür reserviert sein, das Schreib-/Lesegerät in einen Diagnosemodus zu versetzen. Dies kann zum einen bedeuten, dass für eine bestimmte Zeit oder für eine bestimmte Anzahl von Lesezyklen der Produktivbetrieb ausgeschaltet wird, und stattdessen Probe-Erfassungszyklen oder dgl. durchgeführt werden. Bei einem solchen Probe-Erfassungszyklus kann beispielsweise die Reaktion eines erfolgreichen Lesezyklus lediglich in einem Aufblinken einer Betriebs-Leuchtdiode an dem Schreib-/Lesegerät oder dgl. bestehen. Weiter können auch Diagnose-Modi dafür vorgesehen sein, Statusmeldungen oder "Log"-Dateien auf den Konfigurierungs-Transponder oder auf einen im Anwenderspeicher näher spezifizierten anderen Transponder zu schreiben. Dabei kann alternativ der bisherige Anwenderspeicher bzw. die dort bereits vorhandenen Statusinformationen oder Log-Dateien überschreiben werden, oder aber zu bestehenden Informationen hinzugefügt werden. Im letzten Fall ergibt sich der Vorteil, dass in komplexen Anordnungen mit mehren Schreib-/Lesegeräten ein einziger "Debugging"-Transponder zum Sammeln der Statusmeldungen oder zum Sammeln von Fehlerinformationen oder dgl. in einem einzigen Durchlauf ausreicht. Ein sog. "Test-Modus" oder "Diagnose-Modus" kann entweder selbsttätig nach Speicherung von Diagnosedaten beendet werden, oder aber durch einen speziell dafür eingerichteten Transponder, dessen erfasste Identifizierungsnummer dem Schreib-/Lesegerät die Anweisung gibt, den regulären Betrieb wieder aufzunehmen.

Anhand der Identifizierungsnummer oder aber auch anhand einer Information im Anwenderspeicher des für die Konfigurierung eingesetzten Transponders kann spezifiziert sein, welches Schreib-/Lesegerät, insbesondere in einer Anordnung mit mehreren solcher Geräte, auf diesen Transponder "reagieren" soll. Dabei kann entweder z.B. eine Typ-Information oder eine Seriennummer oder auch ein Seriennummern-Bereich in dem Anwenderspeicher verzeichnet sein. Es ist aber auch möglich, dass der Konfigurierungs-Transponder einen Link, eine Adresse oder eine URL- oder dgl. umfasst, wobei das Schreib-/Lesegerät nach Erfassung des derart konfigurierten Transponders selbsttätig gemäß der Adresse, dem Link oder der URL eine Verbindung zu einem externen Gerät (z.B. Server) aufnimmt, um dort Konfigurierungsdaten, eine neue Firmware oder dgl. zu beziehen. So ist es beispielsweise möglich, durch einfaches Einlesen eines dafür bestimmten Transponders ein Firmware-Update zu initiieren oder einen neuen Betriebsparameter-Satz zu laden oder dgl.

Ein Ausführungsbeispiel des erfindungsgemäßen Verfahrens wird nachfolgend anhand der Zeichnungen erläutert.

Es dient gleichzeitig der Erläuterung eines Ausführungsbeispiels für ein erfindungsgemäßes Schreib-/Lesegerät.

Dabei zeigen
- Figur 1: schematisch eine Anordnung aus einem Schreib-/Lesegerät und einem für eine Konfigurierung vorgesehenen Transponder, wobei der Transponder in einen Lesebereich des Schreib-/Lesegerätes eingebracht wird, und
- Figur 2: in tabellarischer Ansicht ein einfaches Beispiel für Konfigurierungs-Aktionen und KonfigurierungsDaten, die mit Teilen (Präfix) von Identifizierungsnummern von Transpondern verknüpft sind.

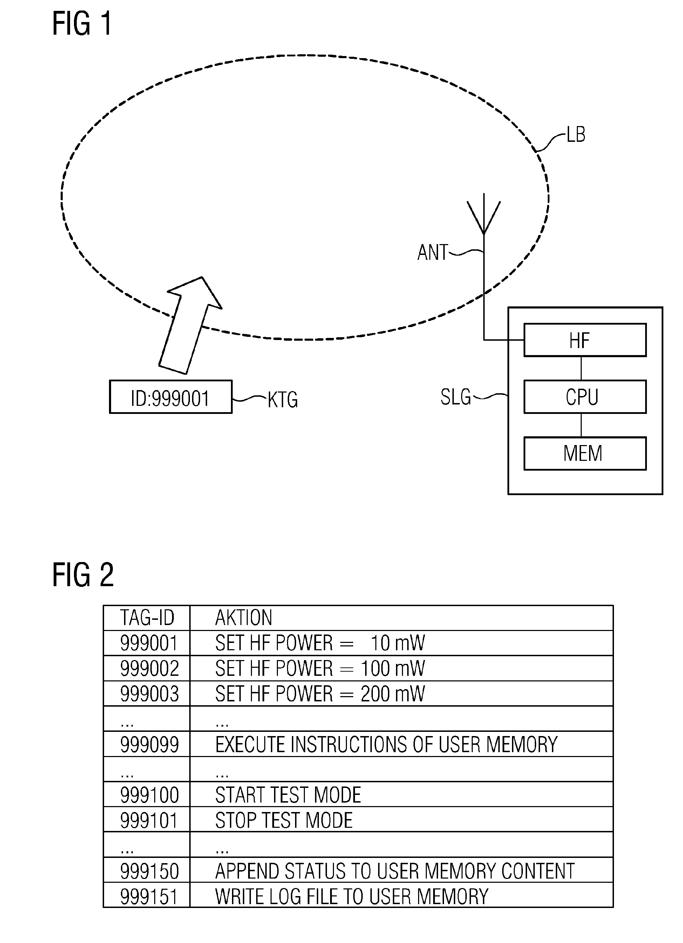

Die Figur 1 zeigt schematisch ein Schreib-/Lesegerät SLG, welches mit einem Hochfrequenz-Teil HF, einem Prozessor CPU und einem Speicher MEM ausgerüstet ist. Das Schreib-/Lesegerät SLG ist über eine (nicht dargestellte) drahtgebundene Host-Schnittstelle mit einer industriellen Steuerung verbunden, um beispielsweise die Identifizierungsnummern und die Nutzdaten aus dem Anwenderspeicher jeweils erfasster RFID-Transponder an die industrielle Steuerung oder dgl. weiterzuleiten. Das Hochfrequenz-Teil HF ist mit einer Antenne ANT verbunden, die im Zentrum eines Lesebereichs LB angeordnet ist, d.h., dass innerhalb des Lesebereiches LB befindliche RFID-Transponder von dem Schreib-/Lesegerät SLG erfasst und ausgelesen werden können, und andere, außerhalb des Lesebereichs LB befindliche RFID-Transponder nicht. In der Figur 1 ist weiterhin ein für die Zwecke einer Konfiguration des Schreib-/Lesegerätes SLG bestimmter RFID-Transponder KTG dargestellt; der Pfeil soll dabei symbolisieren, dass zum Zwecke der Konfiguration dieser RFID-Transponder KTG in den Lesebereich LB des Schreib-/Lesegerätes SLG eingebracht wird. Alternativ können solche Transponder einen Schalter aufweisen, der nur zur Konfiguration geschaltet wird, um ungewollte Konfigurations-Aktionen zu vermeiden.

Die für eine Konfigurierung eingesetzten RFID-Transponder KTG sind dadurch gekennzeichnet, dass deren Identifizierungsnummer "ID" oder "TAG-ID" für die Zwecke der Konfigurierung reserviert sind, d.h., dass anhand der Identifizierungsnummer geschlüsselt ist, ob es sich um einen "produktiven" Transponder aus dem Regelbetrieb einer RFID-Anordnung handelt, oder um einen Transponder, der Anweisungen und Informationen für eine Konfiguration von Betriebsparametern oder für die Ausführung von Konfigurations-bezogenen Befehlen des Schreib-/Lesegerätes SLG bereitstellt. Im vorliegenden Ausführungsbeispiel werden für die Zwecke der Konfiguration komplette Identifikationsnummern-Bereiche, auch Nummernkreise genannt, verwendet.

Dies bedeutet, dass bei beispielsweise 10-stelligen Identifizierungsnummern nur einige ausgewählte Stellen, hier: die ersten sechs Ziffern, darüber entscheiden, welche Funktionalität der RFID-Transponder KTG hat bzw. auslösen soll. In den Figuren sind daher nur die ersten sechs Stellen der reservierten Identifizierungsnummern ID dargestellt; bei beispielsweise 10-stelligen Identifizierungsnummern bedeutet dies, dass bis zu 10000 verschiedene RFID-Transponder KTG mit derselben Konfigurierungs-Funktionalität existieren können, unter der Voraussetzung, dass jeder RFID-Transponder eine eindeutige Identifizierungsnummer aufweist.

In der Figur 2 ist schematisch ein einfaches Beispiel in Form einer Tabelle dargestellt, wobei in der Tabelle jeweils ein für die Konfigurierung entscheidender Präfix, also die ersten sechs Stellen, möglicher RFID-Transponder KTG mit der jeweils damit verknüpften Aktion (Befehl, Anweisung, ...) verzeichnet ist. Diese Tabelle ist im Speicher MEM des Schreib-/Lesegerätes SLG administriert; bei einem Schreib-/Lesegerät SLG mit Anschluss an ein Netzwerk oder mit einem externen Datenspeicher (z.B. USB-Festplatte, Speicherkarte) kann die Tabelle aus der Figur 2 auch anderweitig gespeichert sein.

Im Folgenden sei angenommen, dass das Schreib-/Lesegerät SLG in eine Automatisierungsaufgabe eingebunden ist, beispielsweise in einem Warenlager, wo Waren, die mit RFID-Transpondern gekennzeichnet sind, an einem Wareneingangs- oder Warenausgangstor erfasst werden, wobei die Identifizierungsnummern ID durch das Schreib-/Lesegerät SLG mittels einer Netzwerkverbindung an ein Warenwirtschaftssystem gemeldet werden.

Im Folgenden sei weiter eingenommen, dass ein RFID-Transponder KTG mit der Identifizierungsnummer 999001 gemäß der Darstellung in der Figur 1 in den Lesebereich LB des Schreib-/Lesegerätes SLG eingebracht oder dort aktiviert (eingeschaltet) wird. Das Schreib-/Lesegerät SLG ist derart eingerichtet, dass es in regelmäßigen Zeitabständen, beispielsweise 10 mal in jeder Sekunde, alle im Lesebereich LB befindlichen RFID-Transponder erfasst ("inventory"), wobei der RFID-Transponder KTG erfasst wird. Dabei wird die Identifizierungsnummer ID (die hier mit 999001 beginnt) über die Luftschnittstelle ausgelesen und in einem ersten Schritt mit der im Speicher MEM administrierten Tabelle, die in der Figur 2 dargestellt ist, verglichen. Hierbei wird festgestellt, dass die ersten sechs Stellen der erfassten Identifizierungsnummer ID in der Spalte "TAG-ID" der Tabelle verzeichnet ist, wobei dazu im Speicher MEM ein Anweisung zur Beeinflussung eines Betriebsparameters, nämlich der künftig zu verwendenden Sendeleistung des Schreib-/Lesegerätes SLG, aufgefunden wird. Da die erfasste Identifizierungsnummer, die mit 999001 beginnt, bereits direkt mit einem Befehl verknüpft ist, kann in diesem Fall das weitere Auslesen bzw. Beachten eines Anwenderspeichers (User Memory) des erfassten RFID-Transponders KTG unterbleiben, und es kann sogleich die gewünschte Sendeleistung (hier: 10 mW) eingestellt werden. Gleiches würde gelten, sofern die Identifizierungsnummer mit der Ziffernfolge 999002 oder 999003 beginnen würde, wobei jeweils eine abweichende Sendeleistung spezifiziert wäre.

Ein abweichender Verarbeitungsvorgang im Schreib-/Lesegerät SLG würde eintreten, sofern die erfasste Identifizierungsnummer mit 999099 beginnt. Entsprechend des Eintrags in der Tabelle "EXECUTE INSTRUCTIONS OF USER MEMORY" würde das Schreib-/Lesegerät SLG erkennen, dass nicht eine direkte Aktion mit dieser Identifizierungsnummer ID verknüpft ist, sondern der Anwenderspeicher des erfassten RFID-Transponders KTG auszuwerten wäre. Darin können dann entweder im Klartext oder verschlüsselt Anweisungen niedergelegt sein, die vom Schreib-/Lesegerät SLG interpretiert und ausgewertet werden können. Insbesondere ist es möglich, dass im Anwenderspeicher eine ganze Anzahl von Befehlen niedergelegt sind, die in einer speziellen Ausführungsform auch aus einer Reihe von Zahlenfolgen bestehen können, wie sie in der Tabelle gemäß der Figur 2 in der ersten Spalte eingetragen sind. So kann beispielsweise die aus dem Anwenderspeicher gelesene Aktion bzw. Anweisung "999002; 999100" dafür sorgen, dass nach dem Erfassen des RFID-Transponders zuerst die Hochfrequenz-Sendeleistung umgestellt wird, und anschließend ein "Test-Mode" gestartet wird. Der genannte Test-Mode kann bedeuten, dass die im Anschluss erfassten RFID-Transponder nicht mehr über die Host-Schnittstelle zu der Anwendung (hier: Warenwirtschaftssystem) gemeldet werden, sondern dass lediglich nach dem Erfassen eines RFID-Transponders eine Leuchtdiode an dem Schreib-/Lesegerät SLG aufleuchtet, ein Piepton ausgegeben wird oder eine ähnliche Quittierung erfolgt. Hier sind beliebige Szenarien denkbar, die in der Software des Schreib-/Lesegerätes SLG vorgesehen werden können.

Ein nützliches Beispiel für mittels der Konfigurations-RFID-Transponder KTG ausführbaren Aktionen sind in der Tabelle gemäß der Figur 2 mit den Start-Ziffernfolgen 999150, 999151 angedeutet. Damit kann das Schreib-/Lesegerät SLG angewiesen werden, Statusinformationen oder Protokolldateien ("Log Files") auf einen RFID-Transponder bzw. in dessen Anwenderspeicher zu übertragen. Dabei kann entweder vorab konfiguriert sein (z.B. mittels reservierter TAG-IDs) oder auf dem RFID-Transponder KTG (hier: im Anwenderspeicher) spezifiziert sein, ob die gewünschten Informationen auf den aktuellen Transponder, auf den nächsten Transponder oder auf einen spezifischen, mittels einer Identifikationsnummer vorgegebenen Transponder gespeichert werden sollen. Darüber hinaus kann spezifiziert werden, ob etwaige vorhandene Daten im Anwenderspeicher des zu beschreibenden RFID-Transponders überschrieben werden oder die gewünschte Information an die vorhandenen Daten angehängt wird. Im letzteren Fall ergibt sich der Vorteil, dass in einer Produktionsanlage oder ähnlichem, in der mehrere Schreib-/Lesegeräte SLG angeordnet sind (beispielsweise entlang eines Förderers), mittels eines einzigen RFID-Transponders KTG, der beispielsweise in einem Werkstück-Container mitbefördert wird, Statusmeldungen aller erreichbaren Schreib-/Lesegeräte SLG gesammelt werden können. In einem solchen Szenario ist es sinnvoll, dass zusammen mit den Statusinformationen oder Protokolldateien auch eine Identifizierungsnummer des jeweils Schreibenden der Schreib-/Lesegeräte SLG mitgespeichert wird.

In einem Anwendungsbeispiel wird ein Wartungstechniker zu einer offenkundig oder vermeintlich fehlerhaften RFID-Lesestelle gerufen. Beispielsweise kann das Schreib-/Lesegerät SLG über eine Warnleuchte eine Sammelfehlermeldung anzeigen. Der Wartungstechniker kann nun einen RFID-Transponder KTG, dessen Identifizierungsnummer ID mit der Nummernfolge 999150 oder 999151 beginnt, in den Lesebereich des RFID-Schreib-/Lesegerätes SLG halten, wobei die konkrete Statusinformation oder eine Protokolldatei ("Log File") auf diesen Transponder übertragen wird. An einem Wartungs-Arbeitsplatz kann dieser Transponder später ausgelesen und eine Fehleranalyse anhand der gespeicherten Statusinformationen oder der gespeicherten Protokolldatei vorgenommen werden.

## Patentansprüche

1. Verfahren zur Konfigurierung eines Schreib-/Lesegerätes (SLG) für RFID-Transponder (KTG),
wobei zur Konfigurierung zumindest ein Betriebsparameter des Schreib-/Lesegerätes (SLG) beeinflusst oder ein für die Konfigurierung verwendeter Befehl des Schreib-/Lesegerätes (SLG) ausgeführt wird,
**dadurch gekennzeichnet,**
**dass** in dem Schreib-/Lesegerät (SLG) zumindest eine Identifizierungsnummer (TAG-ID) eines für die Konfigurierung vorgesehenen RFID-Transponders (KTG) für die Konfigurierung reserviert wird,
**dass** in einen Lesebereich (LB) des Schreib-/Lesegerätes (SLG) der zumindest eine für die Konfigurierung vorgesehene Transponder eingebracht und von dem Schreib-/Lesegerät (SLG) gelesen wird,
**dass** die Identifizierungsnummer (TAG-ID) des gelesenen Transponders von dem Schreib-/Lesegerätes (SLG) dahingehend überprüft wird, ob diese Identifizierungsnummer (TAG-ID) für die Konfigurierung reserviert ist, und
**dass** in dem Fall, dass die gelesene Identifizierungsnummer (TAG-ID) eine für die Konfigurierung reservierte Identifizierungsnummer (TAG-ID) ist, sich das Schreib-/Lesegerät (SLG) gemäß einem in diesem mit der Identifizierungsnummer (TAG-ID) verknüpften Befehl und/oder gemäß zumindest einer aus einem Anwenderspeicher des Transponders ausgelesenen Information oder Befehl konfiguriert.

2. Verfahren nach Patentanspruch 1,
**dadurch gekennzeichnet,**
**dass** im Zuge der Reservierung der zumindest einen Identifizierungsnummer (TAG-ID) für die Konfigurierung in dem Schreib-/Lesegerät (SLG) für die zumindest eine reservierte Identifizierungsnummer (TAG-ID) in dem Schreib-/Lesegerät (SLG) ein anzuwendender Betriebsparameter und/oder ein auszuführender Befehl vorgesehen wird.

3. Verfahren nach einem der vorhergehenden Patentansprüche,
**dadurch gekennzeichnet,**
**dass** in dem Anwenderspeicher des für die Konfigurierung eingerichteten Transponders ein anzuwendender Betriebsparameter und/oder ein auszuführender Befehl spezifiziert wird.

4. Verfahren nach einem der vorhergehenden Patentansprüche,
**dadurch gekennzeichnet,**
**dass** zumindest eine Identifizierungsnummer (TAG-ID) für diejenigen Fälle reserviert wird, in denen der Anwenderspeicher des für die Konfigurierung eingerichteten Transponders einen anzuwendenden Betriebsparameter und/oder einen auszuführenden Befehl umfasst.

5. Verfahren nach einem der vorhergehenden Patentansprüche,
**dadurch gekennzeichnet,**
**dass** zumindest eine Identifizierungsnummer (TAG-ID) und/oder ein Befehl zur Aktivierung eines Diagnosemodus des Schreib-/Lesegerätes (SLG) vorgesehen ist, wobei im Diagnosemodus durch das Schreib-/Lesegerät (SLG) Diagnosedaten zu dem oder einen weiteren Transponder übertragen und in dessen Anwenderspeicher gespeichert werden.

6. Verfahren nach Patentanspruch 5,
**dadurch gekennzeichnet,**
**dass** die Diagnosedaten zusätzlich zu bereits im Anwenderspeicher des Transponders vorhandenen Diagnosedaten gespeichert werden.

7. Verfahren nach Patentanspruch 5 oder 6,
**dadurch gekennzeichnet,**
**dass** nach der vollständigen Speicherung der Diagnosedaten im Anwenderspeicher des Transponders der Diagnosemodus durch das Schreib-/Lesegerät (SLG) selbsttätig deaktiviert wird.

8. Verfahren nach einem der Patentansprüche 5 bis 7,
**dadurch gekennzeichnet,**
**dass** mittels der verwendeten Identifizierungsnummer (TAG-ID) und/oder mittels des im Anwenderspeicher des Transponders spezifizierten Befehls die Art des Diagnosemodus und/oder die Art der zu speichernden Diagnosedaten definiert wird.

9. Verfahren nach einem der Patentansprüche 5 bis 8,
**dadurch gekennzeichnet,**
**dass** für die Aktivierung des Diagnosemodus und für die Speicherung der Diagnosedaten verschiedene Transponder verwendet werden.

10. Verfahren nach einem der Patentansprüche 5 bis 9,
**dadurch gekennzeichnet,**
**dass** als Diagnosedaten Fehlercodes und/oder statistische Betriebsdaten des Schreib-/Lesegerätes (SLG) zu dem Transponder übertragen und in dessen Anwenderspeicher gespeichert werden.

11. Verfahren nach einem der vorhergehenden Patentansprüche,
**dadurch gekennzeichnet,**
**dass** in einer Anordnung mit mehreren Schreib-/Lesegeräten (SLG) anhand der Identifizierungsnummer (TAG-ID) und/oder anhand einer Information im Anwenderspeicher des ausgelesenen Transponders das oder die zu konfigurierenden Schreib-/Lesegeräte (SLG) spezifiziert werden, wobei andere der Schreib-/Lesegeräte (SLG) die Konfigurierung ignorieren.

12. Schreib-/Lesegerät (SLG) für RFID-Transponder (KTG), wobei das Schreib-/Lesegerät (SLG) mit zumindest einem konfigurierbaren Parameter und/oder zumindest einem zur Konfigurierung eingerichteten ausführbaren Befehl ausgestattet ist,
**dadurch gekennzeichnet,**
**dass** das Schreib-Lesegerät zur Konfigurierung des zumindest einen Betriebsparameters und/oder zur Ausführung des zumindest einen zu seiner Konfigurierung verwendbaren Befehls anhand der empfangenen Identifizierungsnummer (TAG-ID) und/oder anhand der aus einem Anwenderspeicher eines für die Konfigurierung eingerichteten und von dem Schreib-/Lesegerät (SLG) gelesenen Transponders eingerichtet ist.
